# EUROPÄISCHE PATENTSCHRIFT

(11) **EP 1 618 779 B1**
(45) Veröffentlichungstag und Bekanntmachung des Hinweises auf die Patenterteilung: **23.12.2015**
(21) Anmeldenummer: 05014596.0
(22) Anmeldetag: 06.07.2005
(51) Int. Cl.: A01F 15/04, A01F 15/08, B30B 9/30

(54) **Tragrahmen für eine Grossballenpresse**
Support frame for a large-bale press
Châssis porteur pour une presse à grandes balles

(30) Priorität: 21.07.2004 DE 102004035411
(43) Veröffentlichungstag der Anmeldung: 25.01.2006
(73) Patentinhaber: CLAAS Selbstfahrende Erntemaschinen GmbH, 33428 Harsewinkel (DE)
(72) Erfinder: Clostermeyer, Gerhard, 33334 Gütersloh (DE); Tertilt, Werner, 33428 Marienfeld (DE); Hiegel, Gregory, 57820 Henridorff (FR)

(56) Entgegenhaltungen:
- EP-A- 0 305 806
- DE-U1- 8 631 456
- US-A- 5 787 694
- US-A1- 2003 029 330
- US-A1- 2004 134 360

## Beschreibung

Die Erfindung bezieht sich auf einen Tragrahmen für eine Großballenpresse zum Pressen von landwirtschaftlichem Erntegut zu quaderförmigen Großballen, nach dem Oberbegriff des Patentanspruchs 1.

Derartige Tragrahmen zur Aufnahme der Eigenmasse von Großballenpressen, einschließlich der Antriebs- und Funktionselemente sowie der gepressten Ballen sind bereits in verschiedenen Ausführungen bekannt.

So ist beispielsweise in der Fig. 1 der DE 101 45 690 A1 ein Längsrahmen dargestellt, der sich über die gesamte Länge unterhalb des Presskanals in gewölbter Form erstreckt. Unterhalb des Bereiches der Bewegungsbahn der Nadelschwinge ist der Längsrahmen mit einer Tandemachse zur Aufnahme von beidseitig je zwei Laufrädern verbunden. Da die Nadelschwinge den Presskanal funktionsbedingt umgreift, ist es im Bereich der Bewegungsbahn der Nadelschwinge nicht möglich, eine vertikal verlaufende Stütze zur Stabilisierung des Presskanals anzuordnen. Deshalb ist in diesem Bereich eine konstruktive Verstärkung des Längsrahmens und des Presskanals erforderlich, wodurch ein erhöhter Aufwand, insbesondere bei leistungstarken Großballenpressen mit großen Ballenabmessungen entsteht.

Dokument US 2004/0134360 A1 offenbart einen Tragrahmen für eine Großballenpresse mit allen Kennzeichnen aus dem Oberbegriff vom Anspruch 1.

Der Erfindung liegt die Aufgabe zugrunde, den Tragrahmen so auszuführen, dass durch eine günstigere Übertragung der wirkenden Belastungen eine Senkung des Herstellungsaufwandes durch einen geringeren Materialeinsatz und reduzierte Montagekosten möglich ist.

Erfindungsgemäß wird diese Aufgabe durch die im Patentanspruch 1 genannten kennzeichnenden Merkmale gelöst. Weitere vorteilhafte Ausführungen sind in den nachgeordneten Ansprüchen enthalten.

Indem sich der Längsrahmen der Ballenpresse vom Erntegutaufnahmebereich bis zum unteren Querträger des vorderen Querrahmens erstreckt und mit diesem verbunden ist und wobei dieser vordere Querrahmen im Wirkbereich der wenigstens einen Nadelschwinge angeordnet ist, wird eine kurzbauende und materialsparende Tragrahmenkonstruktion möglich. Dies hat insbesondere den Vorteil, dass der Presskanal mit den darin befindlichen Großballen über den vorderen Querrahmen unmittelbar auf der Tandemachse abgestützt wird, wodurch sich eine geradlinige Lastübertragung ergibt. Im hinteren Bereich der Großballenpresse ist ab dem vorderen Querrahmen unterhalb des Presskanals kein Längsträgerrahmen erforderlich. Da sich der Längsrahmen nur bis zum unteren Querträger erstreckt und damit wesentlich kürzer als bei bekannten Großballenpressen ist und einen entsprechend geringeren Materialaufwand erfordert, kann der Längsrahmen einstückig ausgebildet werden, so dass die Montagekosten der sonst mehrteiligen und geschraubten oder genieteten Rahmenteile entfallen. Des Weiteren verläuft der Presskanal in einer geringeren Höhe über dem Erdboden, da unterhalb der Pressklappen kein Raum für den Rahmen beansprucht wird.

In vorteilhafter Weiterbildung der Erfindung ist der mit dem Längsrahmen verbundene vorderer Querrahmen so aus horizontalen und vertikalen Rahmenelementen aufgebaut, dass diese den Wirkbereich der schwenkbeweglich geführten, die Bindenadein tragenden Nadelschwingen außenseitig umgreift.

Eine besonders raumsparende Ausführung ergibt sich dann, wenn die Nadelschwingen unmittelbar in dem Zwischenraum zwischen den vertikal verlaufenden Seitenstützen des vorderen Querrahmens und den diesen jeweils benachbarten Pressklappen des Presskanals schwenkbeweglich geführt werden.

Eine weitere Erhöhung der Stabilität der Rahmenkonstruktion der Großballenpresse wird dann erreicht, wenn die vorderen und hinteren Querrahmen der Großballenpresse über Zugstreben miteinander verbunden sind.

Die Erfindung wird nachstehend an einem Ausführungsbeispiel näher erläutert. In der zugehörigen Zeichnung zeigen:
- Figur 1:: eine schematische Darstellung einer Großballenpresse in einer Seitenansicht und
- Figur 2:: den Schnitt A-A nach Fig. 1, wobei links der Mittellinie eine Variante des vorderen Querrahmens mit einer durchgehend gerade verlaufenden Seitenstütze und auf der rechten Seite eine Variante mit einer gekröpft ausgebildeten Seitenstütze dargestellt ist.

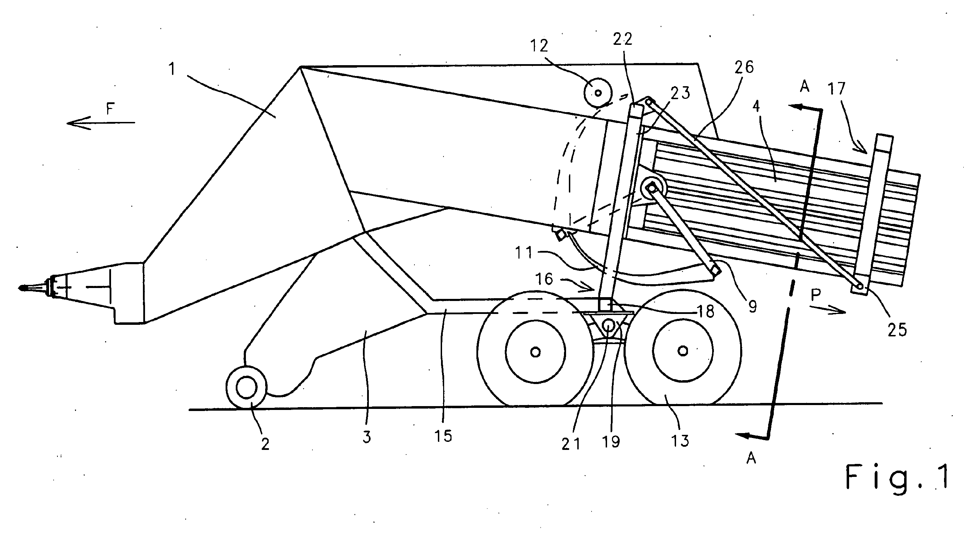

Die in der Fig. 1 dargestellte Großballenpresse 1 wird von einem Zugfahrzeug gezogen und die Antriebs- und Funktionsvorrichtungen über eine Zapfwelle angetrieben. Das auf dem Feldboden liegende Erntegut wird über eine Aufnahmevorrichtung 2 aufgenommen und über einen Zuführkanal 3 mit einer mitwirkenden Vorverdichtereinrichtung in einen rechteckförmigen Presskanal 4 gefördert, in dem ein geradlinig hin und her bewegter Presskolben angeordnet ist. Der Presskanal 4 verläuft in einer in Pressrichtung P geneigten Ebene und umfasst eine untere Pressklappe 5, zwei seitliche Pressklappen 6,7 und eine obere Pressklappe 8, die zur jeweils erforderlichen Veränderung des Pressdruckes in an sich bekannter und deshalb nicht näher erläuterter Weise einstellbar sind.

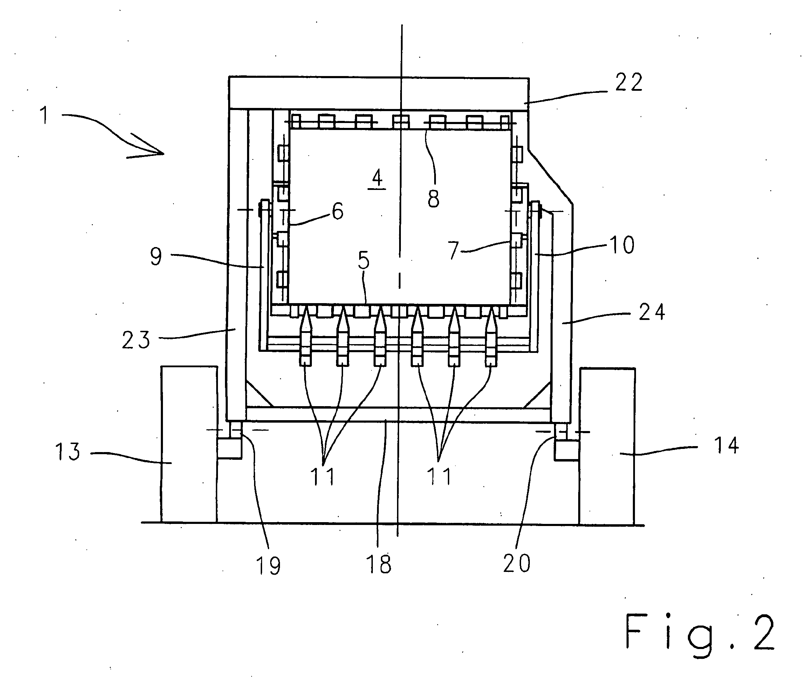

Nach dem Pressen der quaderförmigen Ballen erfolgt der Bindevorgang mittels Bindegarn, durch an Nadelschwingen 9.10 angeordnete Bindenadein 11 sowie oberhalb des Presskanals 4 angebrachte, mit den Bindenadeln 11 zusammenwirkende Knotereinrichtungen 12. Durch den fortlaufenden Pressvorgang werden die gebundenen Ballen zum rückwärtigen Endbereich des Presskanals 4 gefördert und von dort aus über eine Ballenrutsche auf dem Feldboden abgelegt. Sämtliche Belastungen, die durch die Eigenmasse der Großballenpresse 1, den Press- und Bindevorgang sowie durch das aufgenommene und gepresste Erntegut auftreten, werden von dem Tragrahmen der Großballenpresse 1 aufgenommen und über die Laufräder 13,14 in Tandemanordnung auf den Feldboden übertragen. Der Tragrahmen besteht aus dem in Fahrtrichtung F verlaufenden erfindungsgemäßen Längsrahmen 15 sowie aus einem vorderen Querrahmen 16 und einem hinteren Querrahmen 17. Der aus zwei, parallel zueinander verlaufenden, seitlichen Längsträgern bestehende Längsrahmen 15 erstreckt sich vom Aufnahmebereich für das Erntegut bis zum unteren Querträger 18 des vorderen Querrahmens 16. Im Bereich unterhalb des Querträgers 18 sind am Längsrahmen 15 Achsträger 19,20 befestigt, an denen die Tandemachse mit den Laufrädern 13,14 um eine Achse 21 pendelnd angebracht ist. Anstelle einer Tandemachse ist auch der Einsatz einer Einfachachse möglich. Der vordere Querrahmen 16 ist im Bereich oberhalb der Tandemachse angeordnet und umgreift den Presskanal 4. Er besteht aus horizontal verlaufenden unteren und oberen Querträgern 18, 22, die an beiden Enden durch je eine vertikal verlaufende Seitenstütze 23,24 miteinander verbunden sind. Die Seitenstützen 23,24 verlaufen vom unteren Querträger18 bis zum oberen Querträger 22 durchgehend geradlinig (linke Seite in Fig. 2) oder sind gekröpft ausgebildet, wobei sie oberhalb der Bewegungsbahn der Nadelschwinge 10 unmittelbar neben der seitlichen Pressklappe 7 verlaufen (rechte Seite in Fig. 2).

Die Bewegungsbahn der beidseitig neben dem Presskanal 4 angeordneten Nadelschwingen 9,10 verläuft zwischen den seitlichen Pressklappen 6,7 und den Seitenstützen 23,24 sowie oberhalb des unteren Querträgers 18 des vorderen Querrahmens 16. Im Endbereich des Presskanals 4 ist ein hinterer Querrahmen 17 angeordnet, der den Presskanal 4 ringsum umschließt. Neben der Aufgabe der Stabilisierung des Presskanals 4 dient der hintere Querrahmen 17 auch der Aufnahme der hydraulischen Verstelleinrichtung für die Pressklappen 5,6,7,8 sowie für die Befestigung einer nicht dargestellten Ballenrutsche.

Zur Aufnahme der Eigenmasse des Presskanals 4 und der gepressten Ballen durch den vorderen Querrahmen 16 sind beidseitig des Presskanals 4 zwischen dem oberen Querträger 22 des vorderen Querrahmens 16 und dem unteren Querträger 25 des hinteren Querrahmens 17 verlaufende Zugstreben 26, angeordnet Entsprechend der jeweiligen Leistungsklasse der Großballenpresse 1 können ein oder mehrere Zugstreben sowie Querträger unterhalb des Presskanals 4 angeordnet werden.

Es liegt im Rahmen des Könnens eines Fachmanns die beschriebene Tragrahmenkonstruktion in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: Großballenpresse
- 2: Aufnahmevorrichtung
- 3: Zuführkanal
- 4: Presskanal
- 5: untere Pressklappe
- 6,7: seitliche Pressklappen
- 8: obere Pressklappe
- 9,10: Nadelschwingen
- 11: Bindenadeln
- 12: Knotereinrichtungen
- 13,14: Laufräder
- 15: Längsrahmen
- 16: vorderer Querrahmen
- 17: hinterer Querrahmen
- 18: unterer Querträger
- 19,20: Achsträger
- 21: Achse
- 22: oberer Querträger
- 23,24: Seitenstütze
- 25: unterer Querträger
- 26: Zugstreben
- P: Pressrichtung
- F: Fahrtrichtung

## Patentansprüche

1. Tragrahmen für eine Großballenpresse zum Pressen von landwirtschaftlichem Erntegut zu quaderförmigen Großballen, mit einem in Fahrtrichtung verlaufenden Längsrahmen und mit quer dazu angeordneten vorderen und hinteren Querrahmen und zumindest einer, das Bindemittel am Großballen führenden Nadelschwinge sowie einem den Großballen formenden Presskanal,
**dadurch gekennzeichnet, dass**
sich der Längsrahmen (15) vom Erntegutaufnahmebereich bis zum unteren Querträger (18) des vorderen Querrahmens (16) erstreckt und mit diesem verbunden ist und wobei dieser vordere Querrahmen (16) im Wirkbereich der wenigstens einen Nadelschwinge (9, 10) angeordnet ist

2. Tragrahmen für eine Großballenpresse nach Anspruch 1,
**dadurch gekennzeichnet, dass**
der vordere Querrahmen (16) den Presskanal (4) einschließlich der Bewegungsbahn der Nadelschwingen (9,10) und der diesen zugeordneten Bindenadeln (11) umgreift.

3. Tragrahmen für eine Großballenpresse nach einem der vorhergehenden Ansprüche,
**dadurch gekennzeichnet,**
**dass** der vordere Querrahmen (16) von horizontal verlaufenden unteren und oberen Querträgern (18, 22) sowie diese miteinander verbindende vertikal verlaufenden Seitenstützen (23, 24) gebildet wird.

4. Tragrahmen für eine Großballenpresse nach einem der vorhergehenden Ansprüche,
**dadurch gekennzeichnet, dass**
der Großballen im Presskanal (4) zwischen Pressklappen (5-8) geführt wird und die Bewegungsbahn der Nadelschwingen (9,10) zwischen den seitlichen Pressklappen (6,7) und den Seitenstützen (23,24) sowie oberhalb des unteren Querträgers (18) des vorderen Querrahmens (16) verläuft.

5. Tragrahmen für eine Großballenpresse nach einem der vorhergehenden Ansprüche,
**dadurch gekennzeichnet, dass**
die Seitenstützen (23,24) des vorderen Querrahmens (16) vom unteren (18) bis zum oberen Querträger (22) durchgehend geradlinig verlaufen oder gekröpft ausgebildet sind, wobei sie oberhalb der Bewegungsbahn der Nadelschwingen (9,10) unmittelbar neben den seitlichen Pressklappen (6,7) verlaufen.

6. Tragrahmen für eine Großballenpresse nach einem der vorhergehenden Ansprüche,
**dadurch gekennzeichnet, dass**
am Längsrahmen (15) unterhalb des Querträgers (18) Achsträger (19,20) angeordnet sind, an denen eine Einfach- oder Tandemachse befestigt ist.

7. Tragrahmen für eine Großballenpresse nach einem der vorhergehenden Ansprüche,
**dadurch gekennzeichnet, dass**
zwischen dem oberen Querträger (22) des vorderen Querrahmens (16) und dem unteren Querträger (25) des hinteren Querrahmens (17) Zugstreben (26) angeordnet sind.

## Claims

1. A support frame for a big bale press for pressing agricultural crop material to form cuboidal big bales, comprising a longitudinal frame extending in the direction of travel and front and rear transverse frames arranged transversely relative thereto and at least one needle swing arm guiding the binding means at the big bale press and a pressing passage shaping the big bale, **characterised in that** the longitudinal frame (15) extends from the crop material receiving region to the lower transverse carrier (18) of the front transverse frame (16) and is connected thereto and wherein said front transverse frame (16) is arranged in the operative region of the at least one needle swing arm (9, 10).

2. A support frame for a big bale press according to claim 1 **characterised in that** the front transverse frame (16) surrounds the pressing passage (4) including the path of movement of the needle swing arms (9, 10) and the binding needles (11) associated therewith.

3. A support frame for a big bale press according to one of the preceding claims **characterised in that** the front transverse frame (16) is formed by horizontally extending lower and upper transverse carriers (18, 22) and vertically extending side supports (23, 24) connecting same together.

4. A support frame for a big bale press according to one of the preceding claims **characterised in that** the big bale is guided in the pressing passage (4) between pressing flaps (5-8) and the path of movement of the needle swing arms (9, 10) extends between the lateral pressing flaps (6, 7) and the side supports (23, 24) and above the lower transverse carrier (18) of the front transverse frame (16).

5. A support frame for a big bale press according to one of the preceding claims **characterised in that** the side supports (23, 24) of the front transverse frame (16) extend in a straight line throughout from the lower (18) to the upper transverse carrier (22) or are of a cranked configuration, wherein they extend above the path of movement of the needle swing arms (9, 10) directly beside the lateral pressing flaps (6, 7).

6. A support frame for a big bale press according to one of the preceding claims **characterised in that** arranged on the longitudinal frame (15) beneath the transverse carrier (18) are axle carriers (19, 20), to which a single or tandem axle is fixed.

7. A support frame for a big bale press according to one of the preceding claims **characterised in that** tie struts (26) are arranged between the upper transverse carrier (22) of the front transverse frame (16) and the lower transverse carrier (25) of the rear transverse frame (17).

## Revendications

1. Châssis porteur pour une presse à balles grand format destinée au pressage de produit agricole de récolte en balles grand format parallélépipédiques, comprenant un châssis longitudinal s'étendant dans le sens de la marche et comprenant des châssis transversaux avant et arrière disposés transversalement à celui-ci et au moins un balancier d'aiguille guidant le moyen de liage sur la balle grand format ainsi que comprenant un canal de pressage formant la balle grand format, **caractérisé en ce que** le châssis longitudinal (15) s'étend de la zone de ramassage de produit de récolte jusqu'à la traverse inférieure (18) du châssis transversal avant (16) et est relié à celle-ci, et ce châssis transversal avant (16) étant disposé dans la zone d'action du au moins un balancier d'aiguille (9, 10).

2. Châssis porteur pour une presse à balles grand format selon la revendication 1, **caractérisé en ce que** le châssis transversal avant (16) entoure le canal de pressage (4), y compris le trajet de déplacement des balanciers d'aiguille (9, 10) et les aiguilles de liage (11) associées à ceux-ci.

3. Châssis porteur pour une presse à balles grand format selon une des revendications précédentes, **caractérisé en ce que** le châssis transversal avant (16) est formé par des traverses inférieure et supérieure s'étendant horizontalement (18, 22) ainsi que par des montants latéraux (23, 24) qui s'étendant verticalement et qui relient celles-ci entre elles.

4. Châssis porteur pour une presse à balles grand format selon une des revendications précédentes, **caractérisé en ce que**, dans le canal de pressage (4), la balle grand format est guidée entre des volets de pressage (5-8) et le trajet de déplacement des balanciers d'aiguille (9, 10) passe entre les volets de pressage latéraux (6, 7) et les montants latéraux (23, 24) ainsi qu'au-dessus de la traverse inférieure (18) du châssis transversal avant (16).

5. Châssis porteur pour une presse à balles grand format selon une des revendications précédentes, **caractérisé en ce que** les montants latéraux (23, 24) du châssis transversal avant (16) s'étendent, suivant une ligne droite continue, de la traverse inférieure (18) à la traverse supérieure (22) ou sont coudés, en s'étendant, au-dessus du trajet de déplacement des balanciers d'aiguille (9, 10), juste à côté des volets de pressage latéraux (6, 7).

6. Châssis porteur pour une presse à balles grand format selon une des revendications précédentes, **caractérisé en ce que** sur le châssis longitudinal (15), sous la traverse (18), sont disposés des supports d'essieu (19, 20) sur lesquels est fixé un essieu simple ou en tandem.

7. Châssis porteur pour une presse à balles grand format selon une des revendications précédentes, **caractérisé en ce qu'**entre la traverse supérieure (22) du châssis transversal avant (16) et la traverse inférieure (25) du châssis transversal arrière (17) sont disposés des tirants (26).
